(19) Europäisches Patentamt
European Patent Office
Office européen des brevets

(11) Publication number: **0 510 548 A1**

(12) **EUROPEAN PATENT APPLICATION**

(21) Application number: **92106703.9**

(51) Int. Cl.5: **C08L 69/00**, C08L 51/04

(22) Date of filing: **17.04.92**

(30) Priority: **22.04.91 JP 90464/91**

(43) Date of publication of application:
**28.10.92 Bulletin 92/44**

(84) Designated Contracting States:
**BE CH DE FR GB IT LI NL SE**

(71) Applicant: **IDEMITSU PETROCHEMICAL CO. LTD.**
**1-1, Marunouchi 3-chome Chiyoda-ku**
**Tokyo 100(JP)**

(72) Inventor: **Kozakura, Shiro, c/o Idemitsu Petrochemical**
**Co., Ltd., 1-1, Anesakikaigan**
**Ichihara-shi, Chiba-ken(JP)**
Inventor: **Komatsu, Takashi, c/o Idemitsu Petrochemical**
**Co., Ltd., 1-1, Anesakikaigan**
**Ichihara-shi, Chiba-ken(JP)**

(74) Representative: **Türk, Gille, Hrabal, Leifert**
**Brucknerstrasse 20**
**W-4000 Düsseldorf 13(DE)**

(54) **Polycarbonate resin composition.**

(57) Disclosed is a polycarbonate resin composition which comprises
(a) 40 to 99% by weight of a polycarbonate having
(i) a repeating unit (I) represented by the general formula (A):

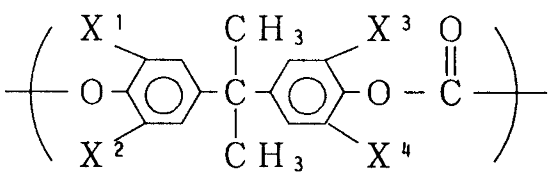

· · · (A)

wherein $X^1$ to $X^4$ are each a halogen atom,
(ii) a repeating unit (II) represented by the formula (B):

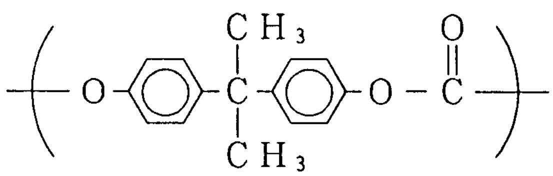

· · · (B)

and (iii) a trihalogenophenoxy group represented by the general formula (C):

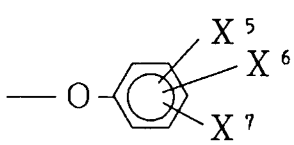

· · · (C)

EP 0 510 548 A1

wherein $X^5$ to $X^7$ are each a halogen atom, at the terminal of the carbonate; and

(iv) a viscosity average molecular weight of 10,000 to 50,000, the proportion of the repeating unit (I) in the main chain being 1 to 10 mol %; and

(b) 60 to 1% by weight of rubber-like elastomer.

The polycarbonate resin composition of the present invention is excellent in heat resistance and flame retardance in addition to its favorable rigidity and heat distortion temperature, and greatly improved fluidity and impact resistance.

## BACKGROUND OF THE INVENTION

1. Field of the Invention

The present invention relates to a polycarbonate resin composition, more particularly, to a polycarbonate resin composition comprising a polycarbonate having a novel structure and a rubber-like elastomer and is excellent in various physical properties such as heat resistance, flame retardance, rigidity, impact resistance, and fluidity.

2. Description of the Related Arts

As halogen-containing polycarbonate copolymers having flame retardance, various ones have heretofore been known. They include (i) a copolymer of tetrabromobisphenol A (TBA) and bisphenol A (BPA) (Japanese Patent Publication No. 24660/1972), (ii) a copolymer of tetrabromobisphenolsulfone (TBS) and BPA (Japanese Patent Application Laid-Open No. 123294/1976), (iii) a copolymer of tetrabromothiodiphenol (TBTDP) and BPA (Japanese Patent Application Laid-Open No. 99226/1981), (iv) a copolymer of the statistical mixture of halogenated bisphenols and BPA (Japanese Patent Application Laid-Open No. 136796/1976), and (v) a blend of the copolymer of thiodiphenol (TDP) and BPA and the copolymer of above (i)(Japanese Patent Application Laid-Open No.50065/1979).

These copolymers are obtained by copolymerization of halogenated bisphenols resulted from halogen-substitution of benzene nucleus in bisphenols for the purpose of containing halogen in an amount necessary for a sufficient flame retardance. All of these copolymerization, however, require these halogenated bisphenols in a comparatively large amount, and accordingly, the mechanical strength of the resulting polycarbonate (particularly, impact resistance) is unfavorably lowered.

Another example of halogen-containing polycarbonate is a polycarbonate in which halogenated phenol is used as a terminator (Japanese Patent Publication No. 40715/1971). Said polycarbonate, however, is not provided with both of an excellent flame-retardance and a high mechanical strength.

In order to overcome above disadvantages, a polycarbonate was produced by a process of copolymerizing BPA, TBA and TDP (Japanese Patent Application Laid-Open No. 140597/1977). According to said process, the resulting polycarbonate is excellent in both of flame retardance and mechanical strength, but is not necessarily sufficient in moldability.

Recently one of the present inventors has succeeded in developing a polycarbonate having a novel structure which is greatly improved in frame retardance, and also is excellent in thermostability at molding while maintaining sufficient mechanical strength and optical properties (Japanese Patent Application Laid-Open No. 200833/1991).

Said novel polycarbonate, however, was found to have a disadvantage in moldability because of its high melt viscosity, although it has physical properties considerably superior to those of the conventional polycarbontes.

Under these circumstances, the present inventors repeated earnest investigation to dissolve the above problems while maintaining the advantages of the above-mentioned novel polycarbonate.

## SUMMARY OF THE INVENTION

The present invention is intended to overcome the above problems and its major object is to develop a polycarbonate resin composition which is excellent in physical properties such as heat resistance, flame retardance, rigidity, impact resistance, and fluidity.

As the result of these investigations by the present inventors, it was found that blending rubber-like elastomer with said novel polycarbonate greatly improves flame retardance as well as fluidity and impact resistance while inhibiting the lowering of rigidity and heat distortion temperature. The present invention has been accomplished basing on such a finding.

The present invention provides a polycarbonate resin composition which comprises

(a) 40 to 99% by weight of a polycarbonate having

(i) a repeating unit (I) represented by the general formula (A):

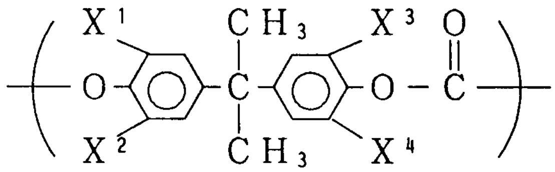

· · · (A)

wherein $X^1$ to $X^4$ are each a halogen atom,
(ii) a repeating unit (II) represented by the formula (B):

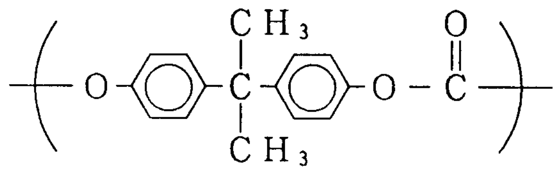

· · · (B)

and (iii) a trihalogenophenoxy group represented by the general formula (C):

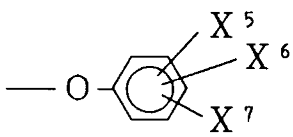

· · · (C)

wherein $X^5$ to $X^7$ are each a halogen atom, as the terminal of the polycarbonate;
and (iv) a viscosity average molecular weight of 10,000 to 50,000, the proportion of the repeating unit (I) in the main chain being 1 to 10 mol%;
and (b) 60 to 1% by weight of rubber-like elastomer.

DESCRIPTION OF THE PREFERRED EMBODIMENTS

The polycarbonate resin composition of the present invention has (a) polycarbonate and (b) rubber-like elastomer as the main component, as mentioned above. Herein the polycarbonate as component (a) has the repeating unit (I) represented by the above general formula (A) and the repeating unit (II) represented by the formula (B). $X^1$ to $X^4$ in the general formula (A) are each a halogen atom such as a bromine atom, a chlorine at and a fluorine atom. Said $X^1$ to $X^4$ may be identical or different, but they are identical in most cases.

The polycarbonate of the present invention has a trihalogenophenoxy group or groups represented by the general formula (C) at the terminal, particularly both terminals of the molecules. $X^5$ to $X^7$ in said general formula (C) also indicate each a halogen atom such as a bromine atom, a chlorine atom, and a fluorine atom, as $X^1$ to $X^4$ described above. $X^1$ to $X^4$ in the repeating unit (I) mentioned above may be identical to or different from $X^5$ to $X^7$ in the general formula (C).

In the polycarbonate of the present invention, the mole fractions of the repeating unit (I) based on the total of the repeating units (I) and (II) in the main chain must be 1 to 10 mol%, preferably 2 to 6 mol%. If the mole fraction of the repeating unit (I) in the main chain is less than 1 mol %, the flame retardance of the resulting polycarbonate is lowered, while if it is in excess of 10 mol%, the mechanical strength of the resulting polycarbonate falls.

As to the polymerization degree of the polycarbonate of the present invention, the viscosity average molecular weight is preferably in the range of 10,000 to 50,000. If the viscosity average molecular weight is less than 10,000, the mechanical strength such as impact resistance is insufficient.

Said polycarbonate has the above-mentioned repeating units (I) and (II), and trihalogenophenoxy group or groups represented by the general formula (C) at the terminal thereof, and includes random copolymer, block copolymer, and alternating copolymer.

The molecular chain of said polycarbonate may contain a small amount of repeating units other than the above repeating units (I) and (II). As the third copolymers to constitute these repeating units, bisphenol

sulfone (BPS) or TDP is used. The content of them should be 0 to 20 mol%, preferably 0 to 10 mol% based on the total amount of BPA and TBA. If the content of it is in excess of 20 mol%, the mechanical strength of the resulting polycarbonate is low.

The polycarbonate as component (a) of the present invention can be produced by various methods. Among them, following two are preferred.

According to the first method, an aqueous alkali solution (e.g., aqueous solution of sodium hydroxide, potassium hydroxide, and sodium carbonate) of tetrahalogenobisphenol A (e.g.,tetrabromobisphenol A,tetrachlorobisphenol A, and tetrafluorobisphenol A) represented by the general formula (A'):

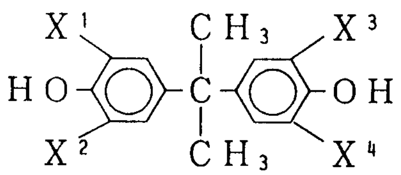

· · · (A')

wherein $X^1$ of $X^4$ are as defined before,
an aqueous alkali solution of bisphenol A (BPA) represented by the formula (B'):

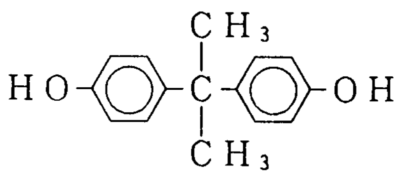

· · · (B'),

and
an aqueous alkali solution of trihalogenophenol (e.g., tribromoplorophenol, and trifluorophenol) represented by the general formula (C'):

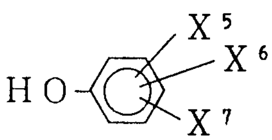

· · · (C')

wherein $X^5$ to $x^7$ are as defined before,
are mixed with a solvent such as methylene chloride, chlorobenzene, pyridine, chloroform, and carbon tetrachloride, and a catalyst such as triethylamine and triethylbenzylammonium chloride, and the resulting mixture is stirred. Then, phosgene is blown into the mixture to proceed with interfacial polycondensation. The reaction system is preferred to be cooled with water or ice since the reaction is exothermic.

In this reaction, the reaction system becomes acidic as the reaction proceeds, so it is preferred to maintain pH at 10 or more by adding alkali while measuring with a pH meter.

In the above reaction, a part (50 mol% or less) of trihalogenophenol can be replaced with a monohydric phenol such as p-tert-butylphenol and phenol, to be used in combination.

In the above polycondensation reaction, tet rahalogenobisphenol A of the formula (A') constitutes the repeating unit (I) of the resulting polycarbonate, and bisphenol A of the formula (B') constitutes the repeating unit (II), so the ratio of above-mentioned tetrahalogenobisphenol A to bisphenol A to be placed is determined depending on the mole fraction of each of the repeating units (I) and (II) of the polycarbonate to be produced, or the proportion of halogen atoms to be contained. On the other hand, the amounts of trihalogenophenol and phosgene introduced specify the polymerization degree of each of the repeating units (I) and (II), further the polymerization degree of whole the polycarbonate, and consequently the molecular weight thereof. Accordingly, the amounts of trihalogenophenol and phosgene to be introduced are determined depending upon the purpose of use.

In blowing phosgene, the rate of phosgene to be blown per hour should be controlled so that a sufficient amount of phosgene might have been introduced at the completion of the reaction.

When the reaction product obtained in this way is introduced into a large amount of a precipitant such as methanol, then the polycarbonate as component (a) of the composition of the present invention is precipitated out.

In the above reaction, various carbonate-forming compound derivatives such as bromophosgene, diphenyl carbonate, di-p-tolyl carbonate, phenyl-p-tolyl carbonate, di-p-chlorophenyl carbonate and dinaphthyl carbonate can be used in place of phosgene.

According to the second method, a polycarbonate oligomer is prepared in advance from bisphenol A and phosgene; the oligomer thus obtained, an aqueous alkali solution of te trahalogenobisphenol A and an aqueous alkali solution of trihalogenophenol, a solvent such as methylene chloride which is capable of dissolving said oligomer, and further a catalyst such as triethylamine and trimethylbenzylammonium chloride are mixed in prescribed ratios and stirred to be prepolymerized; and subsequently an aqueous alkali solution of bisphenol A and, if necessary, p-tert-butylphenol are added to proceed with polycondensation reaction. The resulting reaction product is poured into a large amount of a precipitant (e.g., methanol), and then the polycarbonate as component (a) of the composition of the present invention is precipitated out.

The polycarbonate as component (a) of the composition of the present invention can be efficiently produced by the above-mentioned methods. In addition, also following methods are suitably used.

(i) Tetrahalogenobisphenol A and phosgene are reacted to prepare a polycarbonate oligomer in advance, and said oligomer is reacted with bisphenol A and trihalogenophenol in the presence of a solvent, an aqueous alkali solution, and a catalyst which are suitable for the reaction;

(ii) a polycarbonate oligomer prepared from bisphenol A (or tetrahalogenobisphenol A) and phosgene is reacted with tetrahalogenobisphenol A (or bisphenol A) and trihalogenophenol in the presence of a solvent, an aqueous alkali solution, a catalyst and so forth which are suitable for the reaction, and in that process, phosgene is blown in the reaction system;

(iii) an oligomer is prepared from bisphenol A and phosgen and an oligomer is prepared from tetrahalogenobisphenol A and phosgene, and these two kinds of oligomers are reacted in the presence of trihalogenophenol and a solvent, an aqueous alkali solution, a catalyst and so forth which are suitable for the reaction; and

(iv) in the above method, a multi-stage polymerization, in which polymerization is carried out at two or more stages, is effectively employed.

The above-mentioned polycarbonate can be obtained according to any of these methods.

The polycarbonate as component (a) of the composition of the present invention has a viscosity average molecular weight of 10,000 to 50,000, preferably 13,000 to 50,000, as described above. In order to control the viscosity average molecular weight to be in that range, the amount of trihalogenophenol mainly used as the molecular weight controlling agent is appropriately selected. Usually, the amount of trihalogenophenol is in the ratio of 0.01 to 0.1 (mole) based on the amount of diphenols which constitute the main chain.

In adding BPA, an aqueous alkali solution and catalyst such as triethylamine to polycarbonate oligomer, to produce polycarbonate by interfacial polycondensation, the ratio of catalyst to diphenols should be usually 0.0005 to 0.03 (mol/mol).

When BPA, an aqueous alkali and a catalyst such as triethylamine added to polycarbonate oligomer to produce a polycarbonate by interfacial polycondensation, the amount of caustic alkali should be usually in the ratio of 0.1 to 5.0 (mol/mol) to the amount of diphenols (mol/mol).

The rubber-like elastomer as component (b) of the present invention is not particularly limited, and various rubber-like elastomers can be used depending on the purpose of use. Among them, followings are suitably used.

One of these rubber-like elastomers is (1) resinous polymers prepared by polymerizing one or more vinyl monomers in the presence of rubber-like polymers made mainly from alkyl acrylate and/or alkyl methacrylate. Preferable alkyl acrylates or alkyl methacrylates therein are those containing alkyl group having 2 to 10 carbon atoms, which are specifically ethyl acrylate, butylacrylate, 2-ethylhexyl acrylate, n-octyl methacrylate and the like. The rubber-like polymers mainly made from these alkyl acrylates mean polymers obtained by reacting 70% by weight or more of said alkyl acrylates and 30% by weight or less of other vinyl monomer copolymerizable with the same, such as methyl methacrylate, acrylonitrile, vinyl acetate, and styrene. Herein, these polymers include the polymers obtained by adding properly polyfunctional monomer such as divinyl benzene, ethylene dimethacrylate, triallylcyanurate, and triallyl isocyanurate as a cross-linking agent. Vinyl monomers to be reacted in the presence of said rubber-like polymers are, for example, monomers including aromatic vinyl compounds such as styrene, and $\alpha$ -methylstyrene; and acrylic esters such as methyl acrylate, and ethyl acrylate; methacrylic esters such as methyl methacrylate;

and ethyl methacrylate. One kind or two or more of these monomers are polymerized in the presence of rubber-like polymers. Further, these monomers and other vinyl monomers such as vinyl cyanide compounds including acrylonitile and methacrylonitrile, and vinyl esters including vinyl acetate, vinyl propionate are copolymerized. Herein, the polymerization can be effected by various methods such as bulk polymerization, suspension polymerization, and emulsion polymerization. Products by emulsion polymerization is particularly preferable. Polymers thus obtained preferably contain 20% by weight or more of abovementioned rubber component.

Typical examples of these polymers are MAS resinous elastomers such as a graft copolymer comprising 60 to 80% by weight of n-butyl acrylate, and styrene and methyl methacrylate.

These MAS resinous elastomers are specifically, "KM-330" (trade name, produced by Rhome & Haas Co.) and "METABLEN W529" (trade name, produced by Mitsubishi Rayon Co., Ltd.)

Another example of the above-mentioned rubber-like elastomers is (2) polymers prepared by copolymerizing alkyl acrylate and/or alkyl methacrylate and a polyfunctional polymerizable monomer having conjugated diene-type double bond to prepare copolymers, and then polymerizing one or more vinyl monomers with the copolymers. Alkyl acrylates and alkyl methacrylates to be used therein are the abovementioned ones. Examples of the polyfunctional polymerizable monomers having conjugated diene-type double bond are conjugated diene compounds such as isoprene and butadiene, and compounds having non-conjugated double bond in addition to a conjugated diene-type double bond in a molecule. Specific examples of these compounds are 1-methyl-2-vinyl 4,5-heptadiene-1-ol; 7-methyl-3-methylene-1,6-octadiene; and 1,3,7-octatriene.

At copolymerization of the abovementioned alkyl acrylate and/or alkyl methacrylate with polyfunctional polymerizable monomer having conjugated diene-type double bond, a vinyl monomer such as an aromatic vinyl including styrene and $\alpha$ -methylstyrene, a vinyl cyanide compound including acrylonitrile and methacrylonitrile, a vinyl ester compound including vinyl acetate and vinyl propionate, a vinyl ether compound including methylvinyl ether, and a halogenated vinyl compound including vinyl chloride can be added. Further, a cross-linking agent such as ethylene dimethacrylate and divinyl benzene may be added.

At copolymerization of the abovemetnioned alkyl acrylate and/or alkyl methacrylate and a polyfunctional polymerizable monomer having conjugated diene-type double bond to produce copolymer, the polyfunctional polymerizable monomer having conjugated diene-type double bond should be used so as to be in a proportion of 0.1 to 20% by weight, preferably 1 to 10% by weight of the copolymer.

As the vinyl monomer to be polymerized with the copolymer thus obtained, one or two or more of the abovementioned ones are used. Herein polymerization can be effected by various methods such as bulk polymerization, suspension polymerization, and emulsion polymerization. Products obtained by emulsion polymerization is particularly preferable.

Polymers obtained in the abovementioned manner (rubber-like elastomer) can be used as component (b) of the present invention. The preferred embodiments of these rubber-like elastomers are shown below.

One of these embodiments is a graft copolymer which is obtained by copolymerizing an alkyl (meth)-acrylate such as n-butyl acrylate, 2-ethylhexyl acrylate, and methyl methacrylate, and butadiene, and further a small amount of a cross-linking agent such as ethylene dimethacrylate and divinylbenzene by a usual method to obtain a latex, adding a vinyl monomer such as styrene, acrylonitrile, and vinyl chloride as the graft component monomer to the resulting latex, and graft copolymerizing them by a usual method.

Another embodiment of the rubber-like elastomer is a graft copolymer which is obtained by copolymerizing the above-mentioned alkyl (meth)acrylate and a compound having non-conjugated double bond in addition to conjugated diene-type double bond in one molecule by a usual method to obtain a latex, adding a vinyl monomer as mentioned above as the graft component monomer to the resulting latex, and graft polymerizing them by a usual method. Herein graft polymerization can be effected at one stage, or at multi-stage varying the constituents of the graft component monomer.

More specific example of these copolymers includes an MABS resin elastomer and an MBS resin elastomer such as a graft copolymer obtained by copolymerizing methyl methacrylate and butadiene to form a rubber latex, and then graft polymerizing styrene onto the rubber latex.

As the abovementioned MABS resin elastomer, "HIA 15", "HIA 28", and "HIA 30" (trade names, produced by KUREHA CHEMICAL INDUSTRY CO., LTD.) are preferably used.

Further, rubber-like elastomers other than the above, such as ABS resin elastomer; natural rubber (NR); diene-based rubber including styrene-butadiene rubber (SBR), styrene-butadiene-styrene rubber (SBS) and it's hydrogenated rubber (SEBS), polybutadiene rubber (BR), isoprene rubber (IR), acrilonitrile-butadiene rubber (NBR), acrylonitrile-isoprene rubber (NIR), and chloroprene rubber (CR); olefin-based rubber including isobutylene-isoprene rubber (IIR), ethylene-propylene rubber (EPM), ethylene-propylene-diene rubber (EPDM), chlorosulfonated polyethylene rubber (CSM), and ethylene-vinyl acetate rubber (EVM); various

acryl-based rubbers; organic silicon compound-based rubbers; urethane rubbers; and ether rubbers can be used.

The polycarbonate resin composition of the present invention comprises component (a) and component (b) as the main components. Proportions of these two components can be selected properly in the range in which the polycarbonate as component (a) is 40 to 99% by weight, preferably 50 to 95% by weight, and the proportion of the rubber-like elastomer as component (b) is 60 to 1% by weight, preferably 50 to 5% by weight. If the proportion of the polycarbonate as component (a) is more than 99% by weight, the resulting composition is not provided with a sufficient fluidity. On the other hand, if it is less than 40% by weight, sufficient flame retardance is not obtained.

To the polycarbonate resin composition of the present invention, various additives, besides components (a) and (b) above, can be added if necessary, as far as the purpose of the present invention is not inhibited. For example, inorganic fillers such as glass fiber (GF)(chopped fiber, milled fiber, etc), aluminum fiber, carbon fiber (CF), calcium carbonate, magnesium hydrocabonate, dolomite, silica, diatom earth, alumina, titanium oxide, iron oxide, zinc oxide, magnesium oxide, calcium sulfate, magnesium sulfate, calcium sulfite, talc, clay, mica, asbestos, glass balloon, glass beads, glass flake, calcium silicate, glass powder, monmorillonite, bentonite, carbon black, grafite, iron powder, lead powder, and aluminum powder can be used.

Further, antioxidants such as hindered phenol-based, phosphorus (phosphite and phosphate)-based, and amine-based antioxidants; ultraviolet ray absorbers such as benzotriazol-based and benzophenone-based ones; external lubricants such as aliphatic carboxylate-based and paraffinic lubricants: flame retardants of common use; releasing agents; antistatic agents; and colorants can also be added.

As the above hindered phenol-based antioxidant, "BHT" (2,6-di-tert-butyl-p-cresol), "IRGANOX 1076" and "IRGANOX 1010" (trade name, produced by Ciba Geigy Corp.), "Ethyl 330" (trade name, produced by Ethyl Corp.), "Sumilizer GM" (trade name, produced by Sumitomo Chemical Co, Ltd), and the like are preferably used.

The polycarbonate resin composition of the present invention is prepared by blending and kneading the aforementioned components by a usual method, such as by the use of a ribbon blender, a Henschel mixer, a Bumbury mixer, a drum tumbler, a single-screw extruder, a twin-screw extruder, co-kneader, a multi-screw extruder and the like.

Preferable heating temperature in kneading is usually 250 to 300 °C.

As described above, in the polycarbonate resin composition of the present invention, rigidity and heat distortion temperature are not so largely lowered, and fluidity and impact resistance are greatly improved compared with the compositions obtained by blending rubber-like elastomer with a usual polycarbonate. Moreover, the resin composition of the present invention is excellent in heat resistance and flame retardance.

Accordingly, the polycarbonate resin composition of the present invention can be molded by various known molding methods such as injection molding, extrusion molding, compression molding, calender molding, rotary molding and the like to produce moldings for parts of electric and electronic appliances, office automation appliances and cars, particularly parts for rotating part, transferring part, and driving part.

The present invention is described in greater detail with reference to the following examples.

Reference Example

(Preparation of Polycarbonate Oligomer of Bisphenol A)

In a 2-liter flask euipqqed with a stirrer, 91 g of bisphenol A (BPA), 330 ml of methylene chloride and 560 ml of 2.0 N aqueous solution of sodium hydroxide were placed, and stirred, and then phosgene was blown into the resulting mixture over 70 minutes while stirring and cooling on water bath. The reaction mixture was allowed to stand at room temperature, then a methylene chloride solution of oligomer was isolated as a lower layer. The oligomer has a concentration of 320 g/ℓ , a number average molecular weight of 850, and a concentration of the chloroformate group of 0.7 mol/ℓ .

Preparation Example 1

In a 50-liter reactor equipped with stirrer, 10ℓ of polycarbonate oligomer prepared in the above Reference Example, 1.8ℓ of an aqueous sodium hydroxide solution of tetrabromobisphenol A (TBA) and tribromophenol (TBP) (consisting of 250 g (0.460 mol) of TBA, 150 g (0.453 mol) of TBP, 78.6 g (1.96 mol) of sodium hydroxide and 1.35ℓ of water) and 1.8 ml (0.013 mol) of triethylamine were placed in, and stirred at 500 rpm. After 60 minutes, 3.9ℓ of an aqueous sodium hydroxide solution of BPA (consisting of 457 g

(2.00 mol) of BPA, 267 g (6.68 mol) of sodium hydroxide and 3.42ℓ of water) and 6.1ℓ of methylene chloride were added, and the resulting mixture was stirred.

After stirred for 60 minutes, the reaction product was separated into aqueous layer and methylene chloride layer containing the copolymer formed.

This methylene chloride layer was washed with water, an acid (0.1 N hydrochloric acid), and then with water. From the methylene chloride layer, methylene chloride was removed under reduced pressure at 40 °C to obtain a white powder of copolymer. This white copolymer was dried at 120 °C for one day and night, and then melted by the use of an extruder to be pelletized. The glass transition temperature (Tg) of the pellet was 152.6 °C. The viscosity average molecular weight was 23,900, and the distribution of molecular weight was measured by the use of gel permeation chromatography, a distribution having a single peak at the abovementioned value was shown. An NMR analysis showed that the content of TBA (repeating unit (I)) in the main chain in this copolymer was 3.1 mol%.

Subsequently, said pellets were injection-molded at 300 °C and under the injection pressure of 55 $kg/cm^2$ in an injection molder to obtain a test piece. The test piece was measured for Izod impact strength and flame retardance. The flow value of the pellet was measured by Koka-type flow tester.

The bromine content of the resulting pellet was 6.4% by weight. The bromine content was determined by alkali-decomposition of the sample, and analyzed by the Volhard method.

Further, the test on thermostability at molding was conducted as follows. The pellet was injection-molded to stay at 300 °C for 30 minutes, and then, test sample was formed. The resulting test piece was determined for yellowness index (YI) by the use of a transmission-type photometer.

The results are shown in Table 1.

Preparation Examples 2 and 3

The procedure of Preparation Example 1 was repeated except that aqueous sodium hydroxide solution of TBA and TBP was altered as shown in Table 1. The results are shown in Table 2.

Preparation Example 4

The procedure of Example 1 was repeated except that the aqueous sodium hydroxide solution of TBA and TBP was altered as shown in Table 1. The results are shown in Table 2.

Preparation Example 5

The procedure of Example 1 was repeated except that the aqueous sodium hydroxide solution of TBA and TBP was altered as in Table 1. The results are shown in Table 2.

Table 1

| | Content of Each Component in Aqueous Sodium Hydroxide Solution of TBA and TBP (g) | | | | | |
|---|---|---|---|---|---|---|
| | TBA | BPS | TDP | TBP | PTBP | NaOH |
| Preparation Example 1 | 250 | - | - | 150 | - | 78.6 |
| Preparation Example 2 | 391 | - | - | 150 | - | 102.4 |
| Preparation Example 3 | 247 | - | - | 179 | - | 85.0 |
| Preparation Example 4 | 180 | 74 | - | 179 | - | 109.2 |
| Preparation Example 5 | 180 | - | 161 | 179 | - | 162.3 |

Table 2

| | Composition of Copolymer In Main Chain (mol%) | | | | Content of TBP | Whole Content of Bromine *1 |
|---|---|---|---|---|---|---|
| | BPA | TBA | BPS | TDP | (mol%) | (wt%) |
| Preparation Example 1 | 96.9 | 3.1 | 0 | 0 | 3.0 | 6.4 |
| Preparation Example 2 | 95.1 | 4.9 | 0 | 0 | 2.9 | 8.4 |
| Preparation Example 3 | 96.7 | 3.3 | 0 | 0 | 3.8 | 7.3 |
| Preparation Example 4 | 95.5 | 2.4 | 2.1 | 0 | 3.9 | 6.4 |
| Preparation Example 5 | 92.3 | 2.5 | 0 | 5.2 | 3.8 | 6.5 |

Table 2 (continued-1)

| | Viscosity Average Molecular Weight *2 | Flow Value *3 (ml/sec) | Izod Impact Resistance *4 (kg-cm/cm) |
|---|---|---|---|
| Preparation Example 1 | 23,900 | $2.4 \times 10^{-2}$ | 88 |
| Preparation Example 2 | 23,700 | $2.6 \times 10^{-2}$ | 57 |
| Preparation Example 3 | 19,300 | $6.3 \times 10^{-2}$ | 54 |
| Preparation Example 4 | 19,300 | $5.6 \times 10^{-2}$ | 52 |
| Preparation Example 5 | 19,700 | $5.9 \times 10^{-2}$ | 72 |

Table 2 (continued-2)

| | Combustion*5 (1/16") | Thermostability at Molding *6 (YI) |
|---|---|---|
| Preparation Example 1 | V-0 | 8 |
| Preparation Example 2 | V-0 | 9 |
| Preparation Example 3 | V-0 | 10 |
| Preparation Example 4 | V-0 | 10 |
| Preparation Example 5 | V-0 | 9 |

*1 The bromine content derived from TBA and TBP in the whole polycarbonate was calculated out. The amount of the bromine contained in the polymer was determined by alkali-decomposing a sample and then by an analysis according to the Volhard method.

*2 The viscosity average molecular weight (Mv) was determined by calculation from a viscosity of a methylene chloride solution as measured at 20°C by the use of Ubbellohde viscometer.

*3 The flow value was measured according to JIS K-7210 (load: 160 $kg/cm^2$).

*4 The Izod Impact Resistance was measured according to JIS K-7110 using a test piece of 1/8 inch in thickness.

*5 Measured according to UL-94 (Vertical Combustion Test according to Underwriter's Laboratories Subject 94) using a test piece of 1/16 inch in thickness.

*6 The thermostability at molding was determined by keeping the injection-molded pellet at 300°C for 30 minutes, to form a test piece, then the Yellowness Index (YI) of the test piece was judged by a transmission-type photometer.

Examples 1 to 24 and Comparative Examples 1 to 7

Each prescribed amount of polycarbonate, rubber-like elastomer and other additives were premixed in a drum tumbler, and the resulting mixture was supplied into an extruder, kneaded at 280 ° C, and pelletized. The pellet obtained was injection-molded at a molding temperature of 280 ° C and a die temperature of 80 ° C to obtain a test piece. The resulting test piece was determined for tensile strength, Izod impact strength, flow value, and combustion property. The results are shown in Table 3.

Table 3

| | Polycarbonate | | Rubber-like Elastomer | | Other additives | |
|---|---|---|---|---|---|---|
| | Kind | Amount Blended | Kind | Amount Blended | Kind | Amount Blended |
| Example 1 | PC-1 | 90 | (a) | 10 | - | - |
| Example 2 | PC-2 | 90 | (a) | 10 | - | - |
| Example 3 | PC-3 | 90 | (a) | 10 | - | - |
| Example 4 | PC-4 | 90 | (a) | 10 | - | - |
| Example 5 | PC-5 | 90 | (a) | 10 | - | - |
| Example 6 | PC-1 | 80 | (a) | 20 | - | - |
| Example 7 | PC-1 | 70 | (c) | 30 | - | - |
| Example 8 | PC-2 | 90 | (d) | 10 | - | - |
| Example 9 | PC-2 | 80 | (b) | 20 | - | - |
| Example 10 | PC-4 | 95 | (a) | 5 | - | - |
| Example 11 | PC-1 | 95 | (e) | 5 | - | - |
| Example 12 | PC-1 | 95 | (f) | 5 | - | - |
| Example 13 | PC-2 | 95 | (g) | 5 | - | - |
| Example 14 | PC-1 | 95 | (h) | 5 | - | - |
| Example 15 | PC-1 | 95 | (b) | 5 | GF | 10 |
| Example 16 | PC-1 | 90 | (b) | 10 | GF | 10 |
| Example 17 | PC-1 | 90 | (b) | 10 | GF | 30 |
| Example 18 | PC-1 | 90 | (b) | 10 | GF | 40 |
| Example 19 | PC-1 | 90 | (b) | 10 | talc | 10 |
| Example 20 | PC-1 | 90 | (b) | 10 | $CaCO_3$ | 10 |

Table 3 (continued-1)

| | Polycarbonate | | Rubber-like Elastomer | | Other Additives | |
|---|---|---|---|---|---|---|
| | Kind | Amount Blended | Kind | Amount Blended | Kind | Amount Blended |
| Example 21 | PC-1 | 90 | (b) | 10 | CF | 20 |
| Example 22 | PC-1 | 90 | (e) | 10 | talc | 5 |
| Example 23 | PC-3 | 95 | (a) | 5 | lubricant | 0.5 |
| Example 24 | PC-3 | 90 | (b) | 10 | - | 5 |
| Comparative Example 1 | PC-6 | 100 | - | - | - | - |
| Comparative Example 2 | PC-1 | 100 | - | - | - | - |
| Comparative Example 3 | PC-4 | 90 | (b) | 10 | - | - |
| Comparative Example 4 | PC-1 | 30 | (c) | 70 | - | - |
| Comparative Example 5 | PC-1 | 90 | (b) | 10 | GF | 10 |
| Comparative Example 6 | PC-2 | 100 | - | - | GF | 10 |
| Comparative Example 7 | PC-6 | 90 | (a) | 10 | talc | 10 |

Table 3 (continued-2)

| | Evaluation | | | |
|---|---|---|---|---|
| | Tensile Strength (kg/cm²) | Izod Impact Strength (kg-cm/cm) | Flow Value (ml/sec) | Combustion |
| Example 1 | 640 | 60 | $12 \times 10^{-2}$ | V-2 |
| Example 2 | 640 | 60 | $12 \times 10^{-2}$ | V-2 |
| Example 3 | 650 | 62 | $12 \times 10^{-2}$ | V-2 |
| Example 4 | 660 | 61 | $15 \times 10^{-2}$ | V-2 |
| Example 5 | 650 | 63 | $15 \times 10^{-2}$ | V-2 |
| Example 6 | 600 | 65 | $14 \times 10^{-2}$ | V-2 |
| Example 7 | 480 | 80 | $16 \times 10^{-2}$ | V-2 |
| Example 8 | 650 | 65 | $11 \times 10^{-2}$ | V-2 |
| Example 9 | 540 | 72 | $13 \times 10^{-2}$ | V-2 |
| Example 10 | 720 | 63 | $19 \times 10^{-2}$ | V-2 |
| Example 11 | 690 | 65 | $12 \times 10^{-2}$ | V-2 |
| Example 12 | 710 | 58 | $14 \times 10^{-2}$ | V-2 |
| Example 13 | 690 | 55 | $11 \times 10^{-2}$ | V-2 |
| Example 14 | 650 | 73 | $12 \times 10^{-2}$ | V-0 |
| Example 15 | 1050 | 35 | $4 \times 10^{-2}$ | V-0 |
| Example 16 | 1120 | 33 | $6 \times 10^{-2}$ | V-0 |
| Example 17 | 1300 | 25 | $5 \times 10^{-2}$ | V-0 |
| Example 18 | 1400 | 22 | $4 \times 10^{-2}$ | V-0 |
| Example 19 | 950 | 20 | $6 \times 10^{-2}$ | V-0 |
| Example 20 | 920 | 18 | $6 \times 10^{-2}$ | V-0 |

Table 3 (continued-3)

| | Evaluation | | | |
|---|---|---|---|---|
| | Tensile Strength (kg/cm²) | Izod Impact Strength (kg-cm/cm) | Flow Value (ml/sec) | Combustion |
| Example 21 | 640 | 25 | $5 \times 10^{-2}$ | V-0 |
| Example 22 | 640 | 30 | $8 \times 10^{-2}$ | V-0 |
| Example 23 | 650 | 55 | $12 \times 10^{-2}$ | V-0 |
| Example 24 | 720 | 58 | $10 \times 10^{-2}$ | V-0 |
| Comparative Example 1 | 750 | 90 | $6 \times 10^{-2}$ | V-2 |
| Comparative Example 2 | 720 | 88 | $2.4 \times 10^{-2}$ | V-0 |
| Comparative Example 3 | 620 | 59 | $10 \times 10^{-2}$ | HB |
| Comparative Example 4 | 310 | 90 | $18 \times 10^{-2}$ | HB |
| Comparative Example 5 | 1100 | 34 | $5 \times 10^{-2}$ | HB |
| Comparative Example 6 | 1150 | 7 | $3 \times 10^{-2}$ | V-0 |
| Comparative Example 7 | – | 21 | $6 \times 10^{-2}$ | HB |

Notes:

(1) Kind of Polycarbonate

PC-1 to PC-5: Polycarbonate prepared in Preparation Examples 1to 5, respectively.

PC-6: Toughlon A 2200 (polycarbonate produced from bisphenol A) produced by Idemitsu Petrochemical Co., Ltd.

(2) Kind of Rubber-like Elastomer

(a) : Paraloid KM 330 (acrylic rubber) produced by Rohm & Haas Co., Ltd., USA.

(b) : HI-BLEN B 611 (acrylic rubber) produced by Nippon Zeon Co., Ltd.

(c) : HIA-15 (acrylic rubber) produced by KUREHA CHEMICAL INDUSTRY CO., LTD.

(d) : METABLEN W 529-X (acrylic rubber) produced by Mitsubishi Rayon Co., Ltd.

(e) : BUTYL 268 (butylic rubber) produced by Japan Synthetic Rubber Co., Ltd.

(f) : EP 57P (ethylene-propylene-diene rubber) produced by Japan Synthetic Rubber Co., Ltd.

(g) : Kaliflex TR 1101 (styrene-butadiene-styrene rubber) produced by Shell Chemicals Co., Ltd.

(h) : HI-BLEN B 601 (acrylic rubber) produced by Nippon Zeon Co., Ltd.

(3) Other Additives

GF : Glass fiber, trade name: MA 409 C produced by Asahi Fiber Glass Co., Ltd. (diameter : 13 $\mu$m, length : 3 mm)

talc : average diameter : 0.9 $\mu$m.

$CaCO_3$ : Calcium Carbonate, trade name : Vigot-10, produced by Shiraishi Industry Co., Ltd.

Lubricant : Rikemal S 100A (stearic acid monoglyceride) produced by Riken Vitamin Co., Ltd.

CF : Carbon Fiber, trade name : Besfite HTA-C 6-S, produced

by Toho Rayon Co., Ltd.

(4) Test Method

Tensile Strength : According to JIS K-7203

Izod Impact Value : According to JIS K-7110 (1/8 inch in thickness, notched, measured at 23°C)

Flow Value : According to JIS K-7210 (temperature : 280 °C, load : 160 kg/cm²)

Combustion : According to UL-94 (1/16 inch in thickness)

(5) Proportion of Components

The proportions of polycarbonate and rubber-like elastomer are percent (% by weight) based on the total amount of the two components, and the proportions of other additives are shown by parts by weight based on the total amount of polycarbonate and rubber-like elastomer as 100 parts by weight.

**Claims**

1. A polycarbonate resin composition which comprises
   (a) 40 to 99% by weight of a polycarbonate having
      (i) a repeating unit (I) represented by the general formula (A):

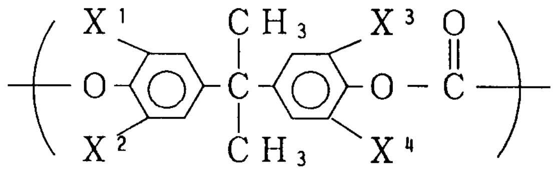

· · · (A)

wherein $X^1$ to $X^4$ are each a halogen atom,
      (ii) a repeating unit (II) represented by the formula (B):

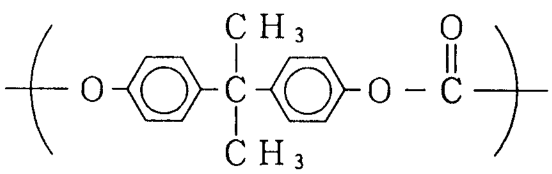

· · · (B)

and (iii) a trihalogenophenoxy group represented by the general formula (C):

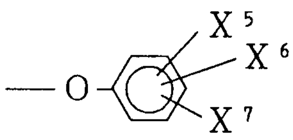

· · · (C)

wherein $X^5$ to $X^7$ are each a halogen atom,
at the terminal of the carbonate; and
(iv) a viscosity average molecular weight of 10,000 to 50,000, the proportion of the repeating unit (I) in the main chain being 1 to 10 mol %; and
(b) 60 to 1% by weight of rubber-like elastomer.

2. The polycarbonate resin composition according to Claim 1, wherein $X^1$ to $X^7$ are each a bromine atom.

3. The polycarbonate resin composition according to Claim 1, comprising (a) 50 to 95% by weight of the polycarbonate and (b) 50 to 5% by weight of the rubber-like elastomer.

4. The polycarbonate resin composition according to Claim 1, wherein the proportion of the repeating unit (I) in the main chain is 2 to 6 mol %.

5. The polycarbonate resin composition according to Claim 1, wherein the rubber-like elastomer is polymers prepared by polymerizing at least one vinyl monomer in the presence of rubber-like polymer made from alkyl acrylate or alkyl methacrylate.

6. The polycarbonate resin composition according to Claim 1, wherein the rubber-like elastomer is polymers prepared by copolymerizing alkyl acrylate or alkyl methacrylate and a polyfunctional polymerizable monomer having conjugated diene-type double bond to prepare copolymers, and then polymerizing at least one vinyl monomer with the copolymers.

European Patent Office

# EUROPEAN SEARCH REPORT

Application Number EP 92106703.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US - A - 3 855 277 (FOX) * Claims 1,2,4-7; examples 1,2,5,6 * | 1,2,5-6 | C 08 L 69/00<br>C 08 L 51/04 |
| A | GB - A - 857 430 (FARBENFABRIKEN BAYER) * Examples 7,8,5; claims 1,3,10; page 4, lines 1-10 * | 1,2,4 | |
| A | US - A - 4 879 329 (HONGO et al.) * Abstract; claim 6 * | 1,2,5,6 | |

TECHNICAL FIELDS SEARCHED (Int. Cl.5)

C 08 L 69/00
C 08 L 51/00
C 08 L 101/00
C 08 G 64/00

The present search report has been drawn up for all claims

| Place of search | Date of completion of the search | Examiner |
|---|---|---|
| VIENNA | 24-07-1992 | SEIRAFI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)